# NEUE EUROPÄISCHE PATENTSCHRIFT

(11) **EP 3 429 844 B2**
(45) Veröffentlichungstag und Bekanntmachung des Hinweises auf die Entscheidung über den Einspruch: **09.04.2025**
(45) Hinweis auf die Patenterteilung: 28.10.2020
(21) Anmeldenummer: 17707069.5
(22) Anmeldetag: 01.03.2017
(51) Int. Cl.: B32B 17/10, C03C 27/12

(54) **VERBUNDSCHEIBE MIT ELEKTRISCH LEITFÄHIGER BESCHICHTUNG FÜR EIN HEAD-UP-DISPLAY**
COMPOSITE PANE HAVING ELECTRICALLY CONDUCTIVE COATING FOR A HEAD-UP DISPLAY
VITRE COMPOSITE DOTÉE D'UN REVÊTEMENT ÉLECTROCONDUCTEUR POUR UN DISPOSITIF D'AFFICHAGE TÊTE HAUTE

(30) Priorität: 17.03.2016 EP 16160839
(43) Veröffentlichungstag der Anmeldung: 23.01.2019
(73) Patentinhaber: SAINT-GOBAIN GLASS FRANCE, 92400 Courbevoie (FR)
(72) Erfinder: SCHULZ, Valentin, 52382 Niederzier (DE); SCHALL, Günther, 52372 Kreuzau (DE)
(74) Vertreter: Gebauer, Dieter Edmund
(86) Internationale Anmeldenummer: PCT/EP2017/054735
(87) Internationale Veröffentlichungsnummer: WO 2017/157660

(56) Entgegenhaltungen:
- EP-A1- 1 800 855
- WO-A1-2009/071135
- WO-A1-2010/121986
- WO-A1-2012/073030
- WO-A1-2015/086233
- WO-A1-2015/086234
- WO-A1-2015/134836
- WO-A1-2015/170771
- WO-A2-03/024155
- DE-A1- 102013 012 648
- US-A1- 2007 020 465

## Beschreibung

Die Erfindung betrifft eine Verbundscheibe und eine Projektionsanordnung für ein Head-Up-Display, ein Verfahren zur Herstellung der Verbundscheibe und deren Verwendung.

Moderne Automobile werden in zunehmendem Maße mit sogenannten Head-Up-Displays (HUDs) ausgestattet. Mit einem Projektor, beispielsweise im Bereich des Armaturenbretts oder im Dachbereich, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

Bei den vorstehend beschriebenen Head-Up-Displays tritt das Problem auf, dass das Projektorbild an beiden Oberflächen der Windschutzscheibe reflektiert wird. Dadurch nimmt der Fahrer nicht nur das gewünschte Hauptbild wahr, welches durch die Reflexion an der innenraumseitigen Oberfläche der Windschutzscheibe hervorgerufen wird (Primärreflexion). Der Fahrer nimmt auch ein leicht versetztes, in der Regel intensitätsschwächeres Nebenbild wahr, welches durch die Reflexion an der außenseitigen Oberfläche der Windschutzscheibe hervorgerufen wird (Sekundärreflexion). Letzteres wird gemeinhin auch als Geisterbild ("Ghost") bezeichnet. Dieses Problem wird gemeinhin dadurch gelöst, dass die reflektierenden Oberflächen mit einem bewusst gewählten Winkel zueinander angeordnet werden, so dass Hauptbild und Geisterbild überlagert werden, wodurch das Geisterbild nicht mehr störend auffällt.

Windschutzscheiben bestehen aus zwei Glasscheiben, welche über eine thermoplastische Folie miteinander laminiert sind. Sollen die Oberflächen der Glasscheiben wie beschrieben in einem Winkel angeordnet werden, so ist es üblich, eine thermoplastische Folie mit nichtkonstanter Dicke zu verwenden. Man spricht auch von einer keilförmigen Folie oder Keilfolie. Der Winkel zwischen den beiden Oberflächen der Folie wird als Keilwinkel bezeichnet. Der Keilwinkel kann über die gesamte Folie konstant (lineare Dickenänderung) sein oder sich positionsabhängig ändern (nichtlineare Dickenänderung). Verbundgläser mit Keilfolien sind beispielsweise aus WO2009/071135A1, EP1800855B1 oder EP1880243A2 bekannt.

Es ist auch bekannt, Windschutzscheiben mit transparenten, elektrisch leitfähigen Beschichtungen zu versehen. Diese Beschichtungen können als IR-reflektierende Beschichtungen wirken, um die Erwärmung des Fahrzeuginnenraums zu verringern und dadurch den thermischen Komfort zu verbessern. Die Beschichtungen können aber auch als beheizbare Beschichtungen verwendet werden, indem sie mit einer Spannungsquelle verbunden werden, so dass ein Strom durch die Beschichtung fließt. Geeignete Beschichtungen enthalten leifähige, metallische Schichten auf Basis von Silber. Da diese Schichten korrosionsanfällig sind, ist es üblich, sie auf die der Zwischenschicht zugewandten Oberfläche der Außenscheibe oder der Innenscheibe aufzubringen, so dass sie keinen Kontakt zur Atmosphäre haben. Silberhaltige transparente Beschichtungen sind beispielsweise bekannt aus WO 03/024155, US 2007/0082219 A1, US 2007/0020465 A1, WO2013/104438 oder WO2013/104439.

Windschutzscheiben mit leitfähigen Beschichtungen im Inneren des Verbundglases weisen im Zusammenhang mit Head-Up-Displays das Problem auf, dass durch die leitfähige Beschichtung eine weitere reflektierende Grenzfläche für das Projektorbild gebildet wird. Dies führt zu einem weiteren unerwünschten Nebenbild, welches auch als Schicht-Geisterbild oder Schicht-"Ghost" bezeichnet wird.

DE102014005977 offenbart eine HUD-Projektionsanordnung mit einer beschichteten Windschutzscheibe. Zur Vermeidung des Schicht-Geisterbilds wird vorgeschlagen, IR-nahe Strahlungsanteile aus dem Projektorbild herauszufiltern, um die Reflexion an der Beschichtung zu reduzieren. Diese Lösung hat allerdings den Nachteil, dass der Projektor entsprechend modifiziert werden muss. Außerdem steht für die Erzeugung des Anzeigebildes nicht mehr das gesamte sichtbare Spektrum steht zur Verfügung.

Der Erfindung liegt die Aufgabe zugrunde, eine Verbundscheibe für ein Head-Up-Display bereitzustellen, welche mit einer elektrisch leitfähigen Beschichtung versehen ist, wobei das Auftreten des durch die Beschichtung erzeugten Geisterbilds wirksam vermieden wird.

Die Aufgabe der vorliegenden Erfindung wird erfindungsgemäß durch eine Verbundscheibe gemäß Anspruch 1 gelöst. Bevorzugte Ausführungen gehen aus den Unteransprüchen hervor.

Die erfindungsgemäße Verbundscheibe für ein Head-Up-Display (HUD) weist eine Oberkante und eine Unterkante auf. Mit Oberkante wird diejenige Seitenkante der Verbundscheibe bezeichnet, welche dafür vorgesehen ist, in Einbaulage nach oben zu weisen. Mit Unterkante wird diejenige Seitenkante bezeichnet, welche dafür vorgesehen ist, in Einbaulage nach unten zu weisen. Ist die Verbundscheibe die Windschutzscheibe eines Kraftfahrzeugs, so wird die Oberkante häufig auch als Dachkante und die Unterkante als Motorkante bezeichnet.

Die erfindungsgemäße Verbundscheibe umfasst eine Außenscheibe und eine Innenscheibe, die über eine keilförmige thermoplastische Zwischenschicht miteinander verbunden sind. Die Verbundscheibe ist dafür vorgesehen, in einer Öffnung, insbesondere einer Fensteröffnung eines Fahrzeugs, den Innenraum gegenüber der äußeren Umgebung abzutrennen. Mit Innenscheibe wird im Sinne der Erfindung die dem Innenraum (Fahrzeuginnenraum) zugewandte Scheibe der Verbundscheibe bezeichnet. Mit Außenscheibe wird die der äußeren Umgebung zugewandte Scheibe bezeichnet.

Die Dicke der Zwischenschicht ist im vertikalen Verlauf zwischen der Unterkante und der Oberkante der Verbundscheibe zumindest abschnittsweise veränderlich. Mit "abschnittsweise" ist hier gemeint, dass der vertikale Verlauf zwischen Unterkante und Oberkante zumindest einen Abschnitt aufweist, in dem sich die Dicke der Zwischenschicht ortsabhängig ändert. Die Dicke kann sich aber auch in mehreren Abschnitte ändern oder im gesamten vertikalen Verlauf. Mit vertikalem Verlauf ist der Verlauf zwischen Unterkante und Oberkante mit Verlaufsrichtung im Wesentlichen senkrecht zu besagten Kanten bezeichnet. Eine Zwischenschicht mit veränderlicher Dicke wird typischerweise als Keilfolie bezeichnet. Der Winkel zwischen den beiden Oberflächen der Zwischenschicht wird als Keilwinkel bezeichnet. Ist der Keilwinkel nicht konstant, so sind zu seiner Messung an einem Punkt die Tangenten an die Oberflächen heranzuziehen.

Wird zur Erzeugung eines Anzeigebildes des HUD ein Projektor auf die Verbundscheibe gerichtet, so wird das gewünschte virtuelle Bild durch Reflexion an der innenraumseitigen, von der Zwischenschicht abgewandten Oberfläche der Innenscheibe erzeugt. Der nichtreflektierte Teilstrahl verläuft durch die Verbundscheibe hindurch und wird an der außenseitigen, von der Zwischenschicht abgewandten Oberfläche der Außenscheibe ein weiteres Mal reflektiert. Dadurch wird ein unerwünschtes zweites virtuelles Bild, das sogenannte Geisterbild oder "Ghost" erzeugt. Im Falle paralleler Scheibenoberfläche würden Bild und Geisterbild versetzt zueinander erscheinen, was für den Betrachter störend ist. Durch den Keilwinkel wird das Geisterbild im Wesentlichen mit dem Bild räumlich überlagert, so dass der Betrachter nur noch ein einziges Bild wahrnimmt.

Die Verbundscheibe weist erfindungsgemäß eine transparente, elektrisch leitfähige Beschichtung auf der zur Zwischenschicht hingewandten Oberfläche der Innenscheibe auf. Durch die Beschichtung wird eine weitere Grenzfläche mit signifikanter Änderung des Brechungsindex erzeugt, also eine weitere reflektierende Grenzfläche für den Lichtstrahl des HUD-Projektors. Die Beschichtung erzeugt dadurch ein weiteres unerwünschtes Geisterbild, das sogenannte Schicht-Geisterbild oder Schicht-"Ghost".

Prinzipiell könnte das Schicht-Geisterbild - ähnlich wie das normale Geisterbild - durch eine keilförmige Anordnung der reflektierenden Oberflächen vermieden werden. Dazu müsste allerdings die Innenscheibe keilförmig ausgebildet werden, was insbesondere im Falle von Glasscheiben, die für Verbundscheiben im Fahrzeugbereich allgemein üblich sind, technisch nur sehr aufwendig zu realisieren wäre.

Erfindungsgemäß weist die Innenscheibe eine Dicke von kleiner als 1,6 mm auf. Die Erfinder haben erkannt, dass bei solch geringen Dicken für die Innenscheibe der räumliche Versatz zwischen Bild und Schicht-Geisterbild hinreichend klein wird, um nicht störend aufzufallen. Dies gilt insbesondere für Bildweiten von mindestens 1,5 m. Unter der Bildweite wird der Abstand vom Betrachter (sogenannte Augposition) zum virtuellen Bild verstanden. Die Wirkung beruht auf der typischen Winkelsehschärfe des menschlichen Auges: bei der angegebenen Bildweite führt die erfindungsgemäß dünne Innenscheibe zu einem Versatz zwischen Hauptbild und Schicht-Geisterbild unter einer Bogenminute, die für das menschliche Auge nicht mehr auflösbar ist.

Die Verwendung dünner Glasscheiben für Verbundscheiben geht jedoch prinzipiell mit einer Verschlechterung der akustischen Eigenschaften, das heißt der Abschirmung gegenüber Umgebungsgeräuschen, und der mechanischen Eigenschaften, insbesondere der Steifigkeit der Verbundscheibe einher.

Dies wird erfindungsgemäß durch die Verwendung einer dickeren Außenscheibe kompensiert, so dass die Gesamtdicke der Verbundscheibe mindestens 4,4 mm beträgt. Die Erfinder haben erkannt, dass mit einer solchen Verbundscheibe das störende Auftreten des Schicht-Geisterbildes vermieden werden kann und die erforderlichen akustischen und mechanischen Eigenschaften gewährleistet werden können.

Aufgrund des erfindungsgemäßen Keilwinkels ist die Dicke der Verbundscheibe nicht konstant. Die Gesamtdicke im Sinne der Erfindung wird an der dünnsten Seitenkante gemessen, also typischerweise an der Unterkante der Verbundscheibe. Die Gesamtdicke ist also die minimale auftretenden Gesamtdicke.

Die Erfindung umfasst auch eine Projektionsanordnung für ein Head-Up-Display, mindestens umfassend eine erfindungsgemäße Verbundscheibe und einen Projektor, der auf einen Bereich der Verbundscheibe gerichtet ist, wobei die Dicke der Zwischenschicht zumindest in diesem Bereich veränderlich ist. Der Projektor bestrahlt die Verbundscheibe über die innenraumseitige Oberfläche der Innenscheibe, die die Hauptreflexionsebene zur Erzeugung des Anzeigebildes bildet (Primärreflexion).

Der Bereich der Verbundscheibe, der dafür vorgesehen ist, mit dem Projektor bestrahlt zu werden, um das HUD-Anzeigebild zu erzeugen, wird auch als HUD-Bereich der Verbundscheibe bezeichnet. Die Dicke der Zwischenschicht ist bevorzugt zumindest im HUD-Bereich veränderlich, insbesondere zumindest im gesamten HUD-Bereich, um Geisterbilder wirksam zu vermeiden. Der Abschnitt mit veränderlicher Dicke kann aber auch größer sein als der HUD-Bereich.

Die erfindungsgemäße Verbundscheibe ist in einer bevorzugten Anwendung eine Fahrzeug-Windschutzscheibe, insbesondere die Windschutzscheibe eines Personen- oder Lastkraftwagens.

Unter einer transparenten Beschichtung wird eine Beschichtung verstanden, die eine mittlere Transmission im sichtbaren Spektralbereich von mindestens 80 % aufweist, die also die Durchsicht durch die Scheibe nicht wesentlich einschränkt.

Bevorzugt sind mindestens 80% der Scheibenoberfläche mit der erfindungsgemäßen Beschichtung versehen. Insbesondere ist die Beschichtung vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Verbundscheibe gewährleisten sollen und daher nicht mit der Beschichtung versehen sind. Der umlaufende unbeschichtete Randbereich weist beispielsweise eine Breite von bis zu 20 cm auf. Er verhindert den direkten Kontakt der Beschichtung zur umgebenden Atmosphäre, so dass die Beschichtung im Innern der Verbundscheibe vor Korrosion und Beschädigung geschützt ist.

Die elektrisch leitfähige Beschichtung kann eine einzelne Schicht oder ein Mehrschichtsystem sein. Die Beschichtung umfasst mindestens eine elektrisch leitfähige Schicht. Typischerweise umfasst die Beschichtung weitere, dielektrische Schichten, die als Entspiegelungsschichten, Blockerschichten oder Oberflächenanpassungsschichten die optischen, elektrischen und/oder mechanischen Eigenschaften der Beschichtung optimieren.

Die mindestens eine elektrisch leitfähige Schicht kann ein Metall, eine Metalllegierung oder ein transparentes leitfähiges Oxid (TCO), beispielsweise Indium-Zinn-Oxid (ITO) enthalten. In einer bevorzugten Ausgestaltung enthält die mindestens eine elektrisch leitfähige Schicht Silber. Der Silberanteil der Schicht beträgt bevorzugt größer 50%, besonders bevorzugt größer 90%. Die Schicht besteht ganz besonders bevorzugt im Wesentlichen aus Silber, abgesehen von etwaigen Verunreinigungen oder Dotierungen.

Die leitfähige Beschichtung kann bevorzugt mehrere elektrische leitfähige Schichten enthalten, die durch dielektrische Schichten voneinander getrennt sind. Durch die Aufteilung des leitfähigen Materials auf mehrere dünne Schichten kann eine hohe elektrische Leitfähigkeit bei hoher optischer Transmission erreicht werden. Die Beschichtung enthält bevorzugt mindestens zwei, besonders bevorzugt zwei oder drei, leitfähige Schichten, insbesondere silberhaltige Schichten.

Typische Materialien, die für die dielektrischen Schichten der leitfähigen Beschichtung gebräuchlich sind, sind beispielsweise Siliziumnitrid, Siliziumoxid, Zinkoxid, Zinn-Zink-Oxid und Aluminiumnitrid.

Die erfindungsgemäße elektrisch leitfähige Beschichtung kann eine IR-reflektierende Beschichtung sein und als Sonnenschutzbeschichtung dienen, um die Aufwärmung des von der Verbundscheibe begrenzten Innenraums durch den IR-Anteil der Sonnenstrahlung verhindern. Die Beschichtung kann auch beheizbar sein. Dazu ist die Beschichtung mit einer Spannungsquelle verbunden, typischerweise über sogenannte Stromsammelschienen oder *Busbars,* so dass ein Strom über die Beschichtung fließt, welche sich dadurch erwärmt, wodurch die Heizfunktion bereitgestellt wird.

Die Beschichtung ist typischerweise ein Dünnschichtstapel. Typische Dicken der Beschichtung betragen kleiner 1 µm. Typische Dicken der leitfähigen Schichten liegen im Bereich von 5 nm bis 50 nm für silberhaltige Schichten und 50 nm bis 500 nm für TCOhaltige Schichten.

Die Gesamtdicke der Verbundscheibe beträgt in einer vorteilhaften Ausgestaltung von 4,4 mm bis 6,0 mm, besonders bevorzugt von 4,4 mm bis 5,5 mm. Verbundscheiben mit diesen Dicken weisen eine ausreichende mechanische Stabilität und Festigkeit auf und vorteilhafte akustische Eigenschaften hinsichtlich der Abschirmung von Umgebungsgeräuschen. Sie sind andererseits aber auch nicht zu dick und schwer, um als Windschutzscheibe typischer Fahrzeuge, insbesondere Kraftfahrzeuge einsetzbar zu sein.

Die Außenscheibe und die Innenscheibe weisen bevorzugt eine konstante Dicke auf mit im Wesentlichen planparallelen Hauptflächen und einer umlaufenden, diese verbindenden Seitenkante.

Die Dicke der Innenscheibe beträgt in einer vorteilhaften Ausgestaltung von 0,4 mm bis 1,5 mm, bevorzugt von 0,7 mm bis 1,1 mm. In diesem Bereich kann das störende Auftreten des Schicht-Geisterbildes besonders wirksam vermieden werden durch eine annähernde Überlagerung von Primärreflexion und Schicht-Geisterbild.

Die Dicke der Außenscheibe beträgt erfindungsgemäß von 2,1 mm bis 4,5 mm, beispielsweise von 2,1 mm bis 3,5 mm oder von 2,5 bis 4,5 mm, bevorzugt von 2,5 mm bis 3,5 mm. In diesem Bereich weist die Verbundscheibe eine vorteilhafte mechanische Stabilität und geräuschabschirmende Eigenschaften auf, ist aber trotzdem noch hinreichend dünn und leicht, um als Windschutzscheibe eingesetzt werden zu können.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borsilikatglas, Quarzglas, Aluminosililatglas) oder transparenten Kunststoffen (beispielsweise Polymethylmethacrylat oder Polycarbonat) gefertigt sein.

Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

In einer bevorzugten Ausgestaltung sind die Außenscheibe und Innenscheibe nicht mit einer Vorspannung versehen. Es bildet sich während des Laminierens der Scheiben dennoch eine charakteristische Verteilung von Zug- und Druckspannungen aus, die der Fachmann aber problemlos von Spannungen, die bewusst durch die Verwendung vorgespannter Scheiben erzeugt werden, unterscheiden kann.

Die Außenscheibe, die Innenscheibe und die thermoplastische Zwischenschicht können klar und farblos, aber auch getönt oder gefärbt sein. Die Gesamttransmission durch die Verbundscheibe beträgt in einer bevorzugten Ausgestaltung größer 70%, insbesondere wenn die Verbundscheibe eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn es als Scheibe für Busse, Züge oder Traktoren vorgesehen ist.

Der Keilwinkel der Zwischenschicht kann im vertikalen Verlauf konstant sein, was zu einer linearen Dickenänderung der Zwischenschicht führt, wobei die Dicke typischerweise von unten nach oben größer wird. Die Richtungsangabe "von unten nach oben" bezeichnet die Richtung von Unterkante zu Oberkante, also den vertikalen Verlauf. Es können aber auch komplexere Dickenprofile vorliegen, bei denen der Keilwinkel von unten nach oben veränderlich (das heißt im vertikalen Verlauf ortsabhängig) ist, linear oder nicht-linear.

Erfindungsgemäß nimmt die Dicke der Zwischenschicht im vertikalen Verlauf von unten nach oben zumindest abschnittsweise zu.

Die veränderliche Dicke der Zwischenschicht kann auf einen Abschnitt des vertikalen Verlaufs beschränkt sein. Dieser Abschnitt entspricht bevorzugt mindestens dem sogenannten HUD-Bereich der Verbundscheibe, also dem Bereich, in dem der HUD-Projektor ein Bild erzeugt. Der Abschnitt kann aber auch größer sein. Die Dicke der Zwischenschicht kann im gesamten vertikalen Verlauf veränderlich sein, beispielsweise von der Unterkante zur Oberkante im Wesentlichen stetig zunehmen.

Der Keilwinkel der Zwischenschicht beträgt bevorzugt von 0,2 mrad bis 1 mrad, besonders bevorzugt von 0,3 mrad bis 0,7 mrad, ganz besonders bevorzugt von 0,4 mrad bis 0,5 mrad. In diesem Bereich wird eine wirksame Kompensation von Doppelbildern erreicht, insbesondere bei typischen Einstrahlwinkeln des HUD-Projektors auf die Windschutzscheibe, welche bei Kraftfahrzeugen typischerweise im Bereich von 50° bis 70° liegen, insbesondere 60° bis 65°.

Die Dicke der Zwischenschicht kann in horizontalen Schnitten (das heißt Schnitte etwa parallel zu Oberkante und Unterkante) konstant sein. Dann ist das Dickenprofil über die Breite der Verbundscheibe konstant. Die Dicke kann aber auch in horizontalen Schnitten veränderlich sein. Dann ist die Dicke nicht nur im vertikalen, sondern auch im horizontalen Verlauf veränderlich.

Die Zwischenschicht ist durch mindestens eine thermoplastische Folie ausgebildet. Der Keilwinkel kann durch geeignete Extrusion der Folie erzeugt sein oder durch Recken einer Folie mit im Ausgangszustand konstanter Dicke. Die Zwischenschicht kann durch eine einzelne Folie ausgebildet sein oder auch durch mehr als eine Folie. In letzterem Fall muss mindestens eine der Folien mit dem Keilwinkel ausgebildet sein. Die Zwischenschicht kann auch aus einer sogenannten akustischen Folie ausgebildet sein, welche eine geräuschdämpfende Wirkung hat. Solche Folien bestehen typischerweise aus mindestens drei Lagen, wobei die mittlere Lage eine höhere Plastizität oder Elastizität aufweist als die sie umgebenden äußeren Lagen, beispielsweise infolge eines höheren Anteils an Weichmachern.

Die Zwischenschicht weist bevorzugt eine Minimaldicke von 0,4 mm bis 1,5 mm, besonders bevorzugt von 0,5 mm bis 1,0 mm auf. Mit Minimaldicke wird die Dicke an der dünnsten Stelle der Zwischenschicht bezeichnet, also typischerweise die Dicke an der Unterkante der Verbundscheibe. Verbundscheiben mit dünneren Zwischenschichten weisen häufig eine zu geringe Stabilität auf, um als Fahrzeugscheibe verwendet werden zu können.

Die Zwischenschicht enthält bevorzugt zumindest Polyvinylbutyral (PVB), Ethylenvinylacetat (EVA), Polyurethan (PU) oder Gemische oder Copolymere oder Derivate davon enthält, besonders bevorzugt PVB. Die Zwischenschicht ist in einer bevorzugten Ausgestaltung aus einer PVB-Folie ausgebildet.

Die Erfindung umfasst außerdem ein Verfahren gemäß Patentanspruch 12 zur Herstellung einer erfindungsgemäßen Verbundscheibe für ein Head-Up-Display.

Soll die Verbundscheibe gebogen sein, so werden die Außenscheibe und die Innenscheibe bevorzugt vor der Lamination einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

Die elektrisch leitfähige Beschichtung wird bevorzugt durch physikalische Gasphasenabscheidung (PVD) auf die Innenscheibe aufgebracht, besonders bevorzugt durch Kathodenzerstäubung ("Sputtern"), ganz besonders bevorzugt durch magnetfeldunterstütze Kathodenzerstäubung.

Die Herstellung der Verbundscheibe durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon.

Die Verbindung von Außenscheibe und Innenscheibe erfolgt dabei üblicherweise unter Einwirkung von Hitze, Vakuum und / oder Druck.

Die Erfindung umfasst außerdem die Verwendung einer erfindungsgemäßen Verbundscheibe in einem Kraftfahrzeug, bevorzugt einem Personenkraftwagen, als Windschutzscheibe, die als Projektionsfläche eines Head-Up-Displays dient.

Im Folgenden wird die Erfindung anhand einer Zeichnung und Ausführungsbeispielen näher erläutert. Die Zeichnung ist eine schematische Darstellung und nicht maßstabsgetreu.

Es zeigen:
- Fig. 1: eine Draufsicht auf eine Ausgestaltung der erfindungsgemäßen Verbundscheibe,
- Fig. 2: einen Querschnitt durch die Verbundscheibe nach Figur 1,
- Fig. 3: die Verbundscheibe der Figur 2 als Bestandteil einer erfindungsgemäßen Projektionsanordnung und
- Fig. 4: ein Flussdiagramm einer Ausführungsform des erfindungsgemäßen Verfahrens.

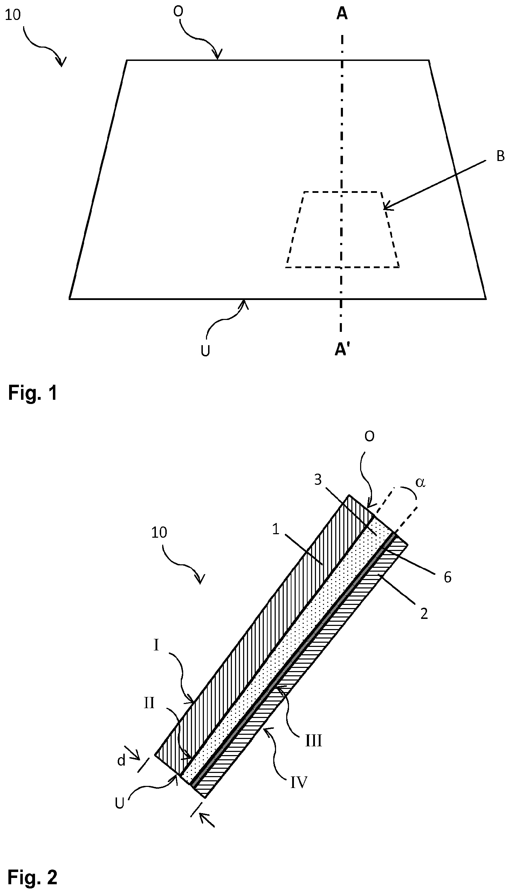

Fig. 1 und Fig. 2 zeigen je ein Detail einer erfindungsgemäßen Verbundscheibe 10, welche aus einer Außenscheibe 1 und einer Innenscheibe 2 besteht, die über eine thermoplastische Zwischenschicht 3 miteinander verbunden sind. Die Verbundscheibe 10 ist als Windschutzscheibe eines Kraftfahrzeugs vorgesehen, welches mit einem Head-Up-Display ausgestattet ist. Die Außenscheibe 1 ist in Einbaulage der äußeren Umgebung zugewandt, die Innenscheibe 2 dem Fahrzeuginnenraum. Die Oberkante O der Verbundscheibe 10 weist in Einbaulage nach oben zum Fahrzeugdach (Dachkante), die Unterkante U nach unten zum Motorraum (Motorkante).

Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die innenraumseitige Oberfläche II der Außenscheibe 1 ist über die Zwischenschicht 3 mit der außenseitigen Oberfläche III der Innenscheibe 2 verbunden.

In der Figur ist auch ein Bereich B angedeutet, welcher dem HUD-Bereich der Verbundscheibe 10 entspricht. In diesem Bereich sollen Bilder durch einen HUD-Projektor erzeugt werden. Die Primärreflexion an der innenraumseitigen Oberfläche IV der Innenscheibe 2 erzeugt die gewünschte HUD-Anzeige als virtuelles Bild. Die nicht reflektierten Strahlungsanteile dringen durch die Verbundscheibe 10 hindurch und werden an der außenseitigen Oberfläche I der Außenscheibe 1 abermals reflektiert (Sekundärreflexion).

Die Dicke der Zwischenschicht 3 nimmt im vertikalen Verlauf von der Unterkante U zur Oberkante O stetig zu. Die Dickenzunahme ist in der Figur der Einfachheit halber linear dargestellt, kann aber auch komplexere Profile aufweisen. Die Zwischenschicht 3 ist aus einer einzelnen Folie aus PVB ausgebildet (eine sogenannte Keilfolie mit veränderlicher Dicke). Der Keilwinkel α beträgt etwa 0,5 mrad.

Durch die keilförmige Ausbildung der Zwischenschicht 3 werden die beiden virtuellen Bilder, die durch Reflexion des Projektorbildes an den Oberfläche I und IV erzeugt werden, miteinander überlagert. Die Sekundärreflexion erscheint daher nicht versetzt zur Primärreflexion, so dass störende Geisterbilder vermieden werden können.

Die Verbundscheibe 10 weist außerdem eine elektrisch leitfähige Beschichtung 6 auf der außenseitigen Oberfläche III der Innenscheibe 2. Die Beschichtung 6 ist IR-reflektierend und dafür vorgesehen, die Aufheizung des Fahrzeuginnenraums durch den IR-Anteil der Sonnenstrahlung zu verringern. Die Beschichtung 6 ist beispielsweise ein Dünnschichtstapel enthaltend zwei oder drei Schichten aus Silber und weitere dielektrische Schichten.

Die Beschichtung 6 stellt eine weitere reflektierende Grenzfläche im Inneren der Verbundscheibe 10 dar, an welcher das Projektorbild ein weiteres Mal reflektiert wird und somit zu einem unerwünschten Nebenbild führt, das sogenannte Schicht-Geisterbild.

Die Innenscheibe 2 besteht als Kalk-Natron-Glas und weist erfindungsgemäß nur eine geringe Dicke auf von beispielsweise 0,7 mm. Dadurch wird sichergestellt, dass der räumliche Versatz zwischen Primärreflexion und Schicht-Geisterbild zu gering ist, als dass letzteres einem Betrachter störend auffiele.

Die Außenscheibe 1 besteht ebenfalls aus Kalk-Natron-Glas und weist eine deutlich größere Dicke auf von beispielsweise 3,0 mm. Dadurch wird gewährleistet, dass die Verbundscheibe 10 insgesamt eine ausreichende mechanische Stabilität, Bruchfestigkeit und Verwindungssteifigkeit aufweist und ausreichende akustische Eigenschaften, um Umgebungsgeräusche in einem für Fahrzeuge akzeptablen Maße zu dämpfen.

Die Minimaldicke der Zwischenschicht 3 beträgt beispielsweise 0,76 mm (gemessen an der Unterkante U). Die Zwischenschicht 3 ist hier durch eine einzige, keilförmige PVB-Folie ausgebildet. Es ist aber auch ein mehrschichtiger Aufbau der Zwischenschicht 3 denkbar, beispielsweise eine 0,36 mm dicke PVB-Folie mit konstanter Dicke, eine 0,76 mm dicke PVB-Keilfolie und eine dazwischenliegende 0,05 mm dicke PET-Folie.

Die Gesamtdicke d der Verbundscheibe 10 beträgt folglich etwa 4,5 mm. Die Gesamtdicke wird an der dünnsten Seitenkante, nämlich der Unterkante gemessen.

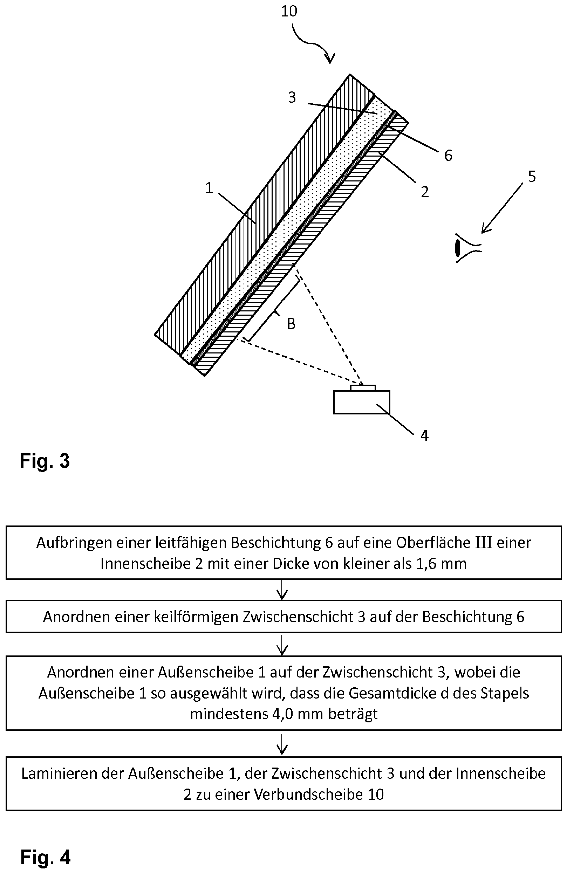

Fig. 3 zeigt die Verbundscheibe 10 der Figuren 1 und 2 als Teil einer Projektionsanordnung für ein HUD. Die Anordnung umfasst außer der Verbundscheibe 10 einen Projektor 4, welcher auf einen Bereich B gerichtet ist. In dem Bereich B (HUD-Bereich) können durch den Projektor Bilder erzeugt werden, welche vom Betrachter 5 (Fahrzeugfahrer) als virtuelle Bilder auf der von ihm abgewandten Seite der Verbundscheibe 10 wahrgenommen werden. Der Keilwinkel im Bereich B führt zu gegeneinander geneigten Oberflächen I, IV der Außenscheibe 1 und der Innenscheibe 2, wodurch Geisterbilder vermieden werden können. Die dünne Innenscheibe führt zur Überlagerung des durch die elektrisch leitfähige Beschichtung 6 hervorgerufenen Schicht-Geisterbildes mit dem Hauptbild, welche folglich nicht mehr getrennt voneinander wahrnehmbar sind.

Fig. 4 zeigt ein Flussdiagramm eines Ausführungsbeispiels des erfindungsgemäßen Verfahrens zur Herstellung einer erfindungsgemäßen Verbundscheibe 10.

### Beispiele:

Es wurden Innenscheiben 2 unterschiedlicher Dicke mit einer leitfähigen Beschichtung 6 versehen, unter einem Einstrahlwinkel von 60° mit einem HUD-Projektor bestrahlt und der Versatz zwischen Primärbild und Schicht-Geisterbild an einer typischen Aug-Position (Position der Augen des Fahrers) bestimmt. Die Bildweite des HUD-Systems betrug 2,3 m, wie es für aktuell eingesetzte HUDs typisch ist. Die Ergebnisse sind in Tabelle 1 zusammengefasst.

**Tabelle 1**

| | | | | | | |
|---|---|---|---|---|---|---|
| **Dicke Innenscheibe 2 / mm** | 2,1 | 1,6 | 1,4 | 1,2 | 1,0 | 0,7 |
| **Abstand Primärreflexion-Schicht-Geisterbild / mm** | 2,291 | 1,745 | 1,527 | 1,309 | 1,090 | 0,763 |

Es ist zu erkennen, dass der Versatz mit abnehmender Dicke der Innenscheibe 2 deutlich geringer wird. Die Erfinder haben festgestellt, dass das Schicht-Geisterbild bei einer Dicke von unter 1,6 mm einem Betrachter kaum auffällt. Durch die erfindungsgemäße Ausgestaltung der Verbundscheibe 10 kann das Auftreten des Schicht-Geisterbilds also effektiv vermieden werden, was für den Fachmann unerwartet und überraschend war.

Durch eine dickere Außenscheibe 1 wird die geringe Dicke der Innenscheibe 2 kompensiert, so dass die Gesamtdicke d in einem Bereich liegt, der für Fahrzeugscheiben, insbesondere Windschutzscheiben üblich ist. Dadurch wird eine hinreichende mechanische Stabilität und ein hinreichendes Abschirmungsvermögen gegenüber Umgebungsgeräuschen sichergestellt.

### Bezugszeichenliste:

- (10): Verbundscheibe

- (1): Außenscheibe
- (2): Innenscheibe
- (3): thermoplastische Zwischenschicht
- (4): Projektor
- (5): Betrachter / Fahrzeugfahrer
- (6): elektrisch leitfähige Beschichtung

- (O): Oberkante der Verbundscheibe 10
- (U): Unterkante der Verbundscheibe 10

- (B): Bereich der Verbundscheibe 10 / HUD-Bereich

- (I): außenseitige, von der Zwischenschicht 3 abgewandte Oberfläche der Außenscheibe 1
- (II): innenraumseitige, zur Zwischenschicht 3 hingewandte Oberfläche der Außenscheibe 1
- (III): außenseitige, zur Zwischenschicht 3 hingewandte Oberfläche der Innenscheibe 2
- (IV): innenraumseitige, von der Zwischenschicht 3 abgewandte Oberfläche der Innenscheibe 2

- α: Keilwinkel
- d: Gesamtdicke der Verbundscheibe 10

- A-A': Schnittlinie

## Patentansprüche

1. Verbundscheibe (10) für ein Head-Up-Display mit einer Oberkante (O) und einer Unterkante (U), mindestens umfassend eine Außenscheibe (1) und eine Innenscheibe (2), die über eine keilförmige thermoplastische Zwischenschicht (3) miteinander verbunden sind, wobei die Dicke der Zwischenschicht (3) im vertikalen Verlauf von unten nach oben zumindest abschnittsweise zunimmt, und eine transparente, elektrisch leitfähige Beschichtung (6) auf der zur Zwischenschicht (3) hingewandten Oberfläche (III) der Innenscheibe (2),
wobei die Innenscheibe (2) eine Dicke kleiner als 1,6 mm aufweist, die Außenscheibe (1) eine Dicke von 2,1 mm bis 4,5 mm aufweist und die Gesamtdicke (d) der Verbundscheibe (10) mindestens 4,4 mm beträgt.

2. Verbundscheibe (10) nach Anspruch 1, die eine Fahrzeug-Windschutzscheibe ist.

3. Verbundscheibe (10) nach Anspruch 1 oder 2, deren Gesamtdicke (d) von 4,4 mm bis 6,0 mm beträgt, bevorzugt von 4,4 mm bis 5,5 mm.

4. Verbundscheibe (10) nach einem der Ansprüche 1 bis 3, wobei die Dicke der Innenscheibe (2) von 0,4 mm bis 1,5 mm beträgt, bevorzugt von 0,7 mm bis 1,1 mm.

5. Verbundscheibe (10) nach einem der Ansprüche 1 bis 4, wobei die Dicke der Außenscheibe (1) von 2,5 mm bis 3,5 mm beträgt.

6. Verbundscheibe (10) nach einem der Ansprüche 1 bis 5, wobei die Minimaldicke der Zwischenschicht (3) von 0,4 mm bis 1,5 mm beträgt, bevorzugt von 0,5 mm bis 1,0 mm.

7. Verbundscheibe (10) nach einem der Ansprüche 1 bis 6, wobei die Zwischenschicht (3) einen Keilwinkel (α) von 0,2 mrad bis 1 mrad aufweist, bevorzugt von 0,3 mrad bis 0,7 mrad, besonders bevorzugt von 0,4 mrad bis 0,5 mrad.

8. Verbundscheibe (10) nach einem der Ansprüche 1 bis 7, wobei die Außenscheibe (1) und/oder die Innenscheibe (2), bevorzugt die Außenscheibe (1) und die Innenscheibe (2) aus Glas gefertigt sind, bevorzugt aus Kalk-Natron-Glas.

9. Verbundscheibe (10) nach einem der Ansprüche 1 bis 8, wobei die Zwischenschicht (3) zumindest Polyvinylbutyral (PVB), Ethylenvinylacetat (EVA), Polyurethan (PU) oder Gemische oder Copolymere oder Derivate davon enthält.

10. Verbundscheibe (10) nach einem der Ansprüche 1 bis 9, wobei die elektrisch leitfähige Beschichtung (6) mindestens eine elektrisch leitfähige Schicht umfasst, die Silber enthält.

11. Projektionsanordnung für ein Head-Up-Display, mindestens umfassend eine Verbundscheibe (10) nach einem der Ansprüche 1 bis 10 und einen Projektor (4), der auf einen Bereich (B) der Verbundscheibe gerichtet ist, wobei die Dicke der Zwischenschicht (3) zumindest in diesem Bereich (B) veränderlich ist.

12. Verfahren zur Herstellung einer Verbundscheibe (10) für ein Head-Up-Display nach einem der Ansprüche 1 bis 10 mit einer Oberkante (O) und einer Unterkante (U), wobei
(a) eine Innenscheibe (2) bereitgestellt wird mit einer Dicke von kleiner als 1,6 mm;
(b) eine Oberfläche (III) der Innenscheibe (2) mit einer transparenten, elektrisch leitfähigen Beschichtung (6) versehen wird;
(c) eine keilförmige thermoplastische Zwischenschicht (3) bereitgestellt wird;
(d) die Zwischenschicht (3) zwischen einer Außenscheibe (1) mit einer Dicke von 2,1 mm bis 4,5 mm und der Innenscheibe (2) angeordnet wird, wobei die mit der Beschichtung (6) versehene Oberfläche (III) der Innenscheibe zur Zwischenschicht (3) hingewandt wird und besagte Kanten der Zwischenschicht (3) zur Oberkante (O) und Unterkante (U) weisend ausgerichtet werden, und wobei die Gesamtdicke (d) der Verbundscheibe (10) mindestens 4,4 mm beträgt; und
(e) die Innenscheibe (2) und die Außenscheibe (1) durch Lamination miteinander verbunden werden.

13. Verfahren nach Anspruch 12, wobei die elektrisch leitfähige Beschichtung (6) durch physikalische Gasphasenabscheidung (PVD) aufgebracht wird, bevorzugt durch Kathodenzerstäubung, besonders bevorzugt durch magnetfeldunterstütze Kathodenzerstäubung.

14. Verwendung einer Verbundscheibe nach einem der Ansprüche 1 bis 10 in einem Kraftfahrzeug, bevorzugt einem Personenkraftwagen, als Windschutzscheibe, die als Projektionsfläche eines Head-Up-Displays dient.

## Claims

1. Composite pane (10) for a head-up display having an upper edge (O) and a lower edge (U), at least comprising an outer pane (1) and an inner pane (2) that are joined to one another via a wedge-shaped thermoplastic intermediate layer (3),
wherein the thickness of the intermediate layer (3) increases from the bottom upward at least in sections in the vertical course, and a transparent, electrically conductive coating (6) on the surface (III) of the inner pane (2) facing the intermediate layer (3),
wherein the inner pane (2) has a thickness less than 1.6 mm, the outer pane (1) has a thickness of 2.1 mm to 4.5 mm, and the total thickness (d) of the composite pane (10) is at least 4.4 mm.

2. Composite pane (10) according to claim 1, which is a vehicle windshield.

3. Composite pane (10) according to claim 1 or 2, whose total thickness (d) is from 4.4 mm to 6.0 mm, preferably from 4.4 mm to 5.5 mm.

4. Composite pane (10) according to one of claims 1 through 3, wherein the thickness of the inner pane (2) is from 0.4 mm to 1.5 mm, preferably from 0.7 mm to 1.1 mm.

5. Composite pane (10) according to one of claims 1 through 4, wherein the thickness of the outer pane (1) is from 2.5 mm to 3.5 mm.

6. Composite pane (10) according to one of claims 1 through 5, wherein the minimum thickness of the intermediate layer (3) is from 0.4 mm to 1.5 mm, preferably from 0.5 mm to 1.0 mm.

7. Composite pane (10) according to one of claims 1 through 6, wherein the intermediate layer (3) has a wedge angle (a) from 0.2 mrad to 1 mrad, preferably from 0.3 mrad to 0.7 mrad, particularly preferably from 0.4 mrad to 0.5 mrad.

8. Composite pane (10) according to one of claims 1 through 7, wherein the outer pane (1) and/or the inner pane (2), preferably the outer pane (1) and the inner pane (2) are made of glass, preferably of soda lime glass.

9. Composite pane (10) according to one of claims 1 through 8, wherein the intermediate layer (3) contains at least polyvinyl butyral (PVB), ethylene vinyl acetate (EVA), polyurethane (PU), or mixtures or copolymers or derivatives thereof.

10. Composite pane (10) according to one of claims 1 through 9, wherein the electrically conductive coating (6) includes at least one electrically conductive layer that contains silver.

11. Projection arrangement for a head-up display, at least comprising a composite pane (10) according to one of claims 1 through 10 and a projector (4) that is aimed at a region (B) of the composite pane, wherein the thickness of the intermediate layer (3) is variable at least in this region (B).

12. Method for producing a composite pane (10) for a head-up display according to one of claims 1 through 10 having an upper edge (O) and a lower edge (U), wherein
(a) an inner pane (2) having a thickness less than 1.6 mm is provided;
(b) a surface (III) of the inner pane (2) is provided with a transparent, electrically conductive coating (6);
(c) a wedge-shaped thermoplastic intermediate layer (3) is provided;
(d) the intermediate layer (3) is arranged between an outer pane (1) having a thickness of 2.1 mm to 4.5 mm and the inner pane (2), wherein the surface (III) of the inner pane provided with the coating (6) faces the intermediate layer (3) and said edges of the intermediate layer (3) are oriented pointing toward the upper edge (O) and the lower edge (U), and wherein the total thickness (d) of the composite pane (10) is at least 4.4 mm; and
(e) the inner pane (2) and the outer pane (1) are joined together by lamination.

13. Method according to claim 12, wherein the electrically conductive coating (6) is applied by physical vapor deposition (PVD), preferably by cathodic sputtering, particularly preferably by magnetic field-enhanced cathodic sputtering.

14. Use of a composite pane according to one of claims 1 through 10 in a motor vehicle, preferably a passenger car, as a windshield that serves as a projection surface of a head-up display.

## Revendications

1. Plaque composite (10) pour un dispositif d'affichage tête haute ayant un bord supérieur (O) et un bord inférieur (U), comportant au moins une plaque externe (1) et une plaque interne (2), qui sont reliées l'une à l'autre par une couche intermédiaire thermoplastique en forme de coin (3),
dans laquelle l'épaisseur de la couche intermédiaire (3) augmentant au moins par sections dans le sens vertical du bas vers le haut, et un revêtement (6) conducteur de l'électricité, transparent, sur la surface (III) de la plaque interne (2) tournée vers la couche intermédiaire (3),
la plaque interne (2) présentant une épaisseur inférieure à 1,6 mm, la plaque externe (1) présentant une épaisseur de 2,1 à 4,5 mm et l'épaisseur totale (d) de la plaque composite (10) étant d'au moins 4,4 mm.

2. Plaque composite (10) selon la revendication 1, qui est un pare-brise de véhicule.

3. Plaque composite (10) selon l'une des revendications 1 ou 2, dont l'épaisseur totale (d) est de 4,4 mm à 6,0 mm, de préférence de 4,4 mm à 5,5 mm.

4. Plaque composite (10) selon l'une des revendications 1 à 3, dans laquelle l'épaisseur de la plaque interne (2) est de 0,4 mm à 1,5 mm, de préférence de 0, 7 mm à 1,1 mm.

5. Plaque composite (10) selon l'une des revendications 1 à 4, dans laquelle l'épaisseur de la plaque externe (1) est de 2,5 mm à 3,5 mm.

6. Plaque composite (10) selon l'une des revendications 1 à 5, dans laquelle l'épaisseur minimale de la couche intermédiaire (3) est de 0,4 mm à 1,5 mm, de préférence de 0,5 mm à 1,0 mm.

7. Plaque composite (10) selon l'une des revendications 1 à 6, dans laquelle la couche intermédiaire (3) présente un angle de coin (α) de 0,2 mrad à 1 mrad, de préférence de 0,3 mrad à 0,7 mrad, de manière particulièrement préférée de 0,4 mrad à 0,5 mrad.

8. Plaque composite (10) selon l'une des revendications 1 à 7, dans laquelle la plaque externe (1) et/ou la plaque interne (2), de préférence la plaque externe (1) et la plaque interne (2), sont faites de verre, de préférence de verre sodocalcique.

9. Plaque composite (10) selon l'une des revendications 1 à 8, dans laquelle la couche intermédiaire (3) contient au moins du polyvinylbutyral (PVB), de l'éthylène-acétate de vinyle (EVA), du polyuréthane (PU), ou des mélanges ou copolymères ou dérivés de ceux-ci.

10. Plaque composite (10) selon l'une des revendications 1 à 9, dans laquelle le revêtement (6) conducteur de l'électricité comporte au moins une couche conductrice de l'électricité, qui contient de l'argent.

11. Ensemble de projection pour un dispositif d'affichage tête haute, comportant au moins une plaque composite (10) selon l'une des revendications 1 à 10 et un projecteur (4), qui est dirigé sur une région (B) de la plaque composite, l'épaisseur de la couche intermédiaire (3) étant variable au moins dans cette région (B).

12. Procédé de fabrication d'une plaque composite (10) pour un dispositif d'affichage tête haute selon l'une des revendications 1 à 10, ayant un bord supérieur (O) et un bord inférieur (U), dans lequel
(a) une plaque interne (2) est fournie ayant une épaisseur inférieure à 1,6 mm;
(b) une surface (III) de la plaque interne (2) est pourvue d'un revêtement (6) conducteur de l'électricité, transparent;
(c) une couche intermédiaire thermoplastique en forme de coin (3) est fournie ;
(d) la couche intermédiaire (3) est disposée entre une plaque externe (1) ayant une épaisseur de 2,1 mm à 4,5 mm et la plaque interne (2), la surface (III) de la plaque interne munie du revêtement (6) étant tournée vers la couche intermédiaire (3) et lesdits bords de la couche intermédiaire (3) étant orientés vers le bord supérieur (O) et vers le bord inférieur (U), et l'épaisseur totale (d) de la plaque composite (10) étant d'au moins 4,4 mm; et
(e) la plaque interne (2) et la plaque externe (1) sont reliées l'une à l'autre par stratification.

13. Procédé selon la revendication 12, dans lequel le revêtement (6) conducteur de l'électricité est appliqué par dépôt physique en phase vapeur (PVD), de préférence par pulvérisation cathodique, de manière particulièrement préférée par pulvérisation cathodique renforcée par champ magnétique.

14. Utilisation d'une plaque composite selon l'une des revendications 1 à 10 dans un véhicule automobile, de préférence un véhicule particulier, en tant que pare-brise, qui sert en tant que surface de projection d'un dispositif d'affichage tête haute.
